# EUROPÄISCHE PATENTSCHRIFT

(11) **EP 0 976 667 B1**
(45) Veröffentlichungstag und Bekanntmachung des Hinweises auf die Patenterteilung: **03.03.2004**
(21) Anmeldenummer: 99114170.6
(22) Anmeldetag: 22.07.1999
(51) Int. Cl.: B65G 1/14, A47F 7/00, A47B 57/06

(54) **Vorrichtung zur Aufnahme mehrerer Gegenstände in übereinanderliegenden Ebenen**
Device adapted for receiving several articles at superposed levels
Dispositif destiné à recevoir des articles sur des niveaux superposés

(30) Priorität: 30.07.1998 DE 19834378; 23.12.1998 DE 19859620
(43) Veröffentlichungstag der Anmeldung: 02.02.2000
(73) Patentinhaber: Wolf Kunststoffe GmbH, 04229 Leipzig (DE)
(72) Erfinder: Wolf, Hans-Joachim, 75447 Sternenfels (DE)
(74) Vertreter: Frank, Gerhard, Dipl.-Phys.

(56) Entgegenhaltungen:
- EP-A- 0 604 337
- US-A- 4 013 173
- US-A- 4 289 289
- US-A- 4 572 382

## Beschreibung

### Technisches Gebiet

Die Erfindung betrifft eine Vorrichtung nach dem Oberbegriff des Patentanspruchs 1.

Die Aufbewahrung oder Lagerung von gleichartigen oder auch verschiedenartigen Gegenständen in übereinanderliegenden Ebenen oder Etagen erfordert das Vorsehen zumindest von seitlichen Halteelementen, wobei oft schienenähnliche Elemente vorgesehen sind, auf denen die zu haltenden oder lagernden Gegenstände schubladenähnlich eingeschoben werden. Ein typisches Beispiel hierfür sind Backbleche in einem Backofen.

Ein besonderes Problem ergibt sich, wenn die übereinander aufzubewahrenden Gegenstände nicht das gleiche Format, insbesondere nicht die gleiche Höhe haben; mit schienenähnlichen seitlichen Führungselementen läßt sich dieses Problem nur dadurch lösen, daß besondere Auflagevorrichtungen zwischen zwei gegenüberliegenden Gleitschienen eingesetzt werden, die jeweils einen Boden für den aufzunehmenden Gegenstand bilden, so daß dann ggf. eine Vielzahl von seitlichen schienenähnlichen Aufnahmeelementen "übersprungen" werden, wenn die Höhe des zu lagernden Gegenstandes größer ist als der vertikale Abstand solcher Aufnahmeelemente. Von besonderem Interesse im Rahmen der Anmeldung sind Lager- und Aufbewahrungssysteme, bei denen relativ eng in einem Gehäuse mehrere Gegenstände, insbesondere von quaderähnlicher Form, möglichst platzsparend übereinander gestapelt werden sollen, wobei natürlich der wahlfreie Zugriff auf jeden dieser Gegenstände erhalten bleiben soll.

Solche Systeme finden beispielsweise Einsatz beim Transport von Speisenbehältem in Isoliergehäusen, wo die gute Ausnutzung des zur Verfügung stehenden Speichervolumens auch aus thermischen und damit energetischen Gründen besonders wünschenswert ist.

### Stand der Technik

Die EP 0437894 B1 zeigt ein Magazin mit einer Vielzahl von Regalen.Innerhalb jedes Regals sind vertikal verschiebbare Konsolen angebracht, die zwischen einer Ruheposition und einer Stützposition verschwenkbar sind. Hierzu sind aufwendige mechanische und elektrische Steuer- und Antriebseinrichtungen erforderlich.

Die DE U 297 18 447 U1 zeigt ein einfacheres System,das aus einem Gestell aus Profilrahmen aufgebaut ist, in dem vertikal übereinander bügelartige Abstelleinrichtungen gehalten sind, die wahlweise in eine Gebrauchsstellung zur Aufnahme eines Gegenstands und eine Nicht-Gebrauchsstellung verdreht werden können.

Bei beiden vorbekannten Lösungen muß eine Einstellung der gewünschten Funktionsposition vor der Eingabe/Einlagerung eines Gegenstands vorgenommem werden.

Die gattungsbildende US-A-4 013 173 zeigt eine regalähnliche Rahmenkonstruktion mit Tragbügeln und diesen zugeordneten Stützteilen, die einen Teil der eingangs genannten Aufgaben erfüllt. Rahmen und Tragbügel sind als Winkelprofile ausgebildet, woraus sich eine stabile, aber auch platzraubende Lösung ergibt.

### Darstellung der Erfindung

Es ist Aufgabe der Erfindung, die gattungsgemässe Vorrichtung derart weiter zu bilden, dass mit ihr Gegenstände mit unterschiedlichen Breiten und Höhen unter optimaler Raumausnutzung innerhalb eines Gehäuses übereinander mit wahlfreiem Zugriff gestapelt werden können, wobei ein einfacher Aufbau und ein hoher Gebrauchswert im Vordergrund stehen sollen.

Diese Aufgabe wird erfindungsgemäß gemäß dem kennzeichnenden Teil des Patentanspruchs 1 gelöst.

Ein Grundgedanke der Erfindung besteht darin, anstelle starrer Schienen oder Aufnahmeelemente zwei gegenüberliegend anordenbare Rahmen gleicher Bauart vorzusehen, deren Aufnahmeelemente jeweils einen Tragbügel beinhalten, der aus seiner im Wesentlichen senkrecht zur Ebene des Rahmens zeigenden Aufnahmeposition um etwa 90° nach oben in eine Freigabeposition verschwenkbar ist und somit den Weg frei macht für Gegenstände, deren Höhe größer ist als der Abstand zwischen den übereinander angeordneten Tragbügeln.

Jeder Rahmen kann dabei in seiner konstruktiven Ausgestaltung unterschiedlich gewählt sein, bevorzugt ist eine leichte Drahtkonstruktion gewählt, mit Runddraht sowohl für die Rahmen als auch für die Stützbügel, die im Gehäuse nahe den Seitenwänden derart eingesetzt werden, daß sie sich an den Seitenwandungen des Gehäuses abstützen können.

In technisch-mechanischer Hinsicht ist die Besonderheit der erfindungsgemäßen Lösung darin zu sehen, daß der Tragbügel in seiner Aufnahmeposition die Last des gehaltenen Gegenstandes nahezu vollständig in seine vertikalen Rahmenabschnitte und von diesen in den Boden des Gehäuses einleitet.

Die Konzeption einer leichten, um eine Schwenkachse verschwenkbaren Ausführung eines Tragbügels ermöglicht in einer vorteilhaften Weiterbildung insbesondere eine automatische Funktion, bei der die Aufnahmeposition die Standardposition ist, aus der der Tragbügel bei Einschub eines Gegenstands automatisch weggeschwenkt wird; dadurch ist eine besonders komfortable Bedienung gegeben.

Weitere vorteilhafte Ausbildungen der erfindungsgemäßen Lösung sind in Unteransprüchen beansprucht.

### Kurze Beschreibung der Zeichnungen

Ein bevorzugtes Ausführungsbeispiel der erfindungsgemäßen Vorrichtung wird nun anhand von Zeichnungen näher erläutert, es zeigen:
- Figur 1:: Eine schematische, perspektivische Teilansicht eines Rahmens R an der Seitenwandung eines Gehäuses,
- Figur 2:: eine Frontalansicht des Rahmens R,
- Figur 3:: eine Detaildarstellung eines Eckabschnitts eines Rahmens gemäß Figur 2,
- Figur 4A und B:: perspektivische Darstellungen eines Paares eines Stützbügels und eines Tragbügels in Aufnahmeposition ( Figur 4A) und Freigabeposition (Figur 4B) des Tragbügels,
- Figur 5A und B:: eine Frontansicht der Funktionsdarstellungen der Bügel gemäß Figuren 4A und 4B, und
- Figur 6:: eine Teilaufsicht auf Stützbügel und Tragbügel bei Einführung eines Gegenstandes.

### Beschreibung des Ausführungsbeispiels

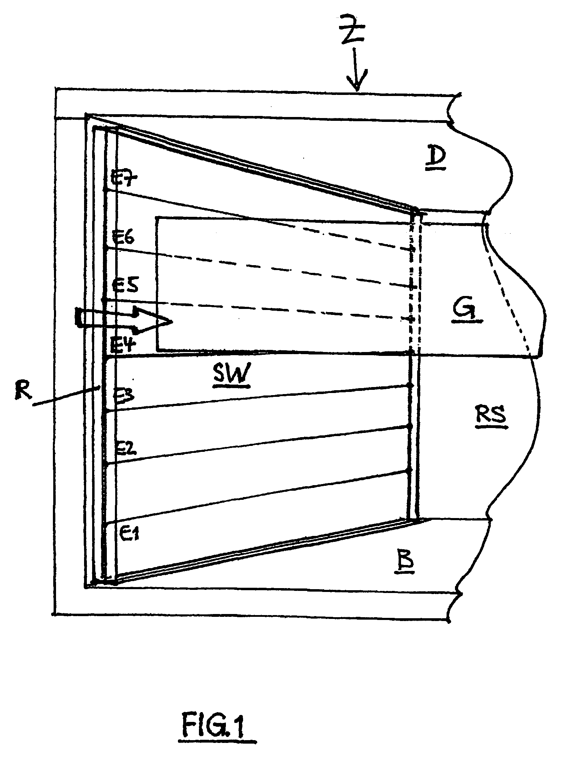

In Figur 1 ist die Anbringung der erfindungsgemäßen Vorrichtung in einem Gehäuse Z dargestellt, wobei nur ein Rahmen R zu sehen ist. Das Gehäuse Z besteht aus Boden B, Rückseite RS, Deckel D und zwei Seitenwandungen SW. Beim dargestellten Anwendungsbeispiel besteht die erfindungsgemäße Vorrichtung lediglich aus einem rechteckigen Rahmen R mit zwei vertikal verlaufenden Seitenteilen und zwei diese Seitenteile verbindenden horizontal verlaufenden Seitenteilen.

Zwischen den vertikalen Seitenteilen sind Etagen E1...E7 dargestellt, in denen ein Gegenstand G untergebracht werden kann; beispielsweise kann der in Figur 1 dargestellte, quaderähnliche Gegenstand G schubladenähnlich auf der Etage E4 in Pfeilrichtung eingeschoben werden, der Gegenstand G erstreckt sich dabei über die Etagen E4, E5 und E6.

Spiegelbildlich hierzu und in Figur 1 nicht dargestellt ist an der gegenüberliegenden Seitenwandung SW des Gehäuses Z ein baugleicher Rahmen R gehalten, so daß die erfindungsgemäße Vorrichtung aus zwei solchen gegenüberliegenden Rahmen aufgebaut ist.

Die Ausbildung des Rahmens R und der Etagen E1...E7 mittels Tragbügeln und Stützbügeln ist in den folgenden Figuren dargestellt:

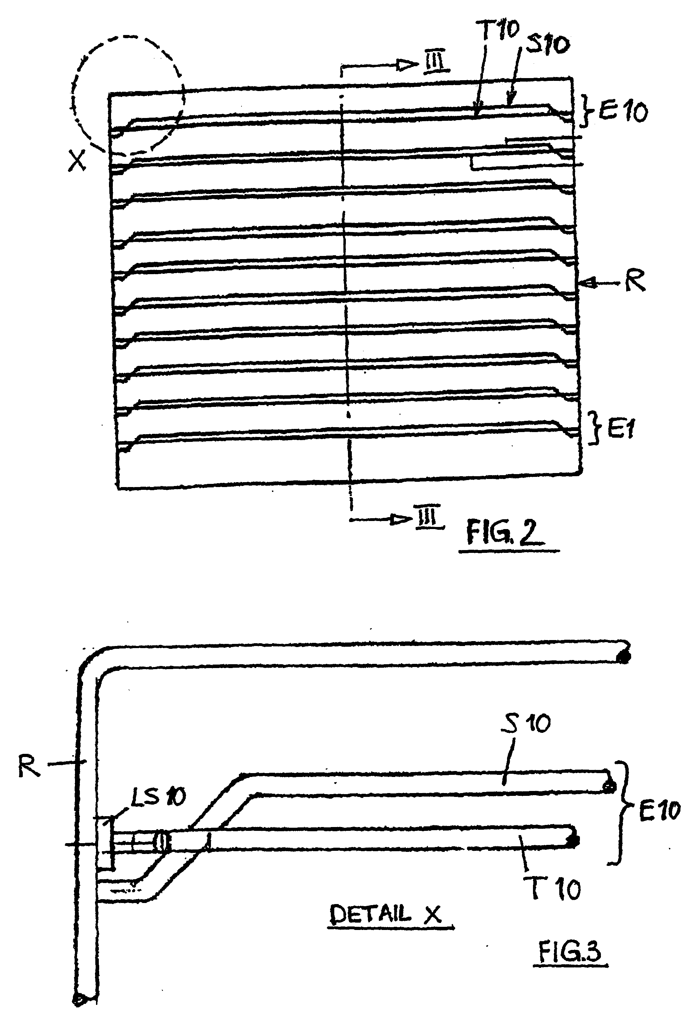

Figur 2 zeigt eine Ansicht eines Rahmens R, der aus zehn Etagen E1...E10 besteht, die, jeweils aus einem Tragbügel T und einem Stützbügel S bestehend, übereinander beabstandet an den vertikalen Abschnitten des Rahmens R gehalten sind. Wie aus der Detaildarstellung der Figur 2 des Rahmens R ersichtlich, bestehen sowohl Rahmen R als auch Stützbügel S und Tragbügel T aus Runddraht, was eine leichte und kostengünstige Ausführung ermöglicht, die insbesondere im Anwendungsbeispiel der Figur 1 Anwendung finden kann, wenn sich dieser Rahmen an einer Seitenwandung SW eines Gehäuses Z abstützen kann und somit auch bei geringen Durchmessern des Runddrahtes eine ausreichende Stabilität gewährleistet ist.

Wie aus der Erläuterung der folgenden Figuren deutlich wird, ist von entscheidender Bedeutung für die Funktion der erfindungsgemäßen Vorrichtung bzw. jedes der beiden zugehörigen Rahmen R die Formgebung von Stützbügel und Tragbügel in Verbindung mit ihrer Halterung im Rahmen R.

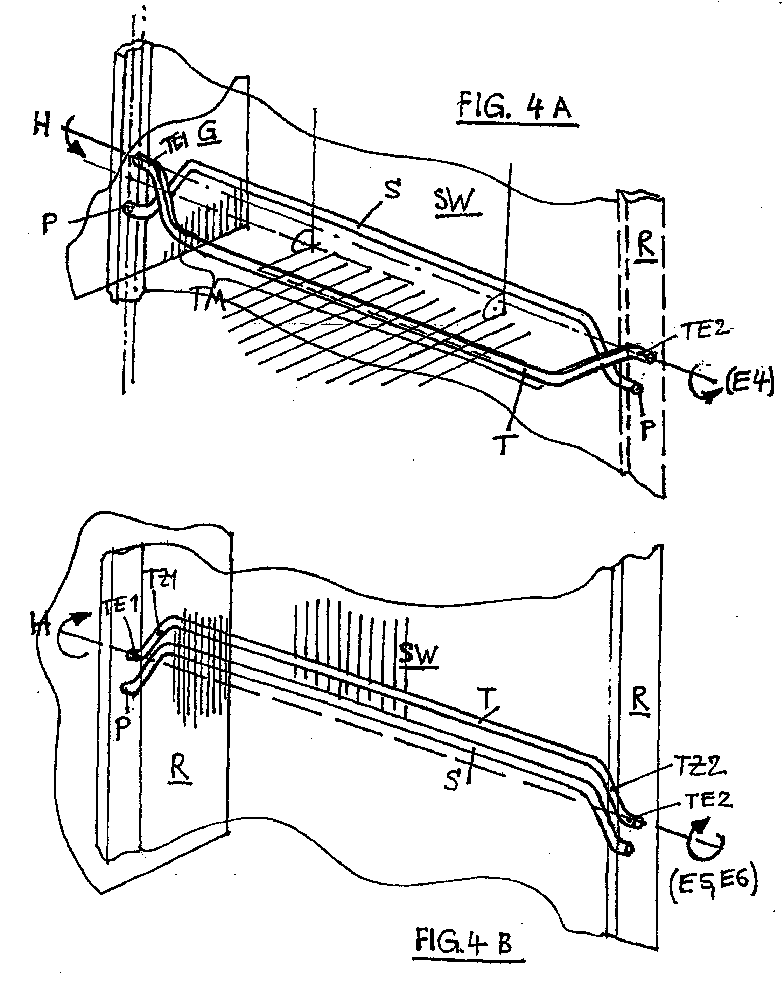

Zur Vereinfachung der zeichnerischen Darstellung sind in den Figuren 4 bis 6 die Rahmenteile als Rechteckprofile in Abwandlung der Variante nach Figur 2 und 3 ausgeführt, die breit genug sind, daß sich ein horizontaler Versatz der Schwenkachse H des Tragbügels T gegenüber den Befestigungspunkten P des Stützbügels ohne weiteres realisieren läßt. Bei Runddrähten mit geringem Durchmesser, wie sie im bevorzugten Ausführungsbeispiel der Figuren 2 und 3 dargestellt sind, läßt sich dieser seitliche Versatz dadurch realisieren, daß die Enden der Tragbügel T in Lochscheiben LS gehalten sind, die randseitig mit dem Rahmen R verbunden sind.

Der Tragbügel T besteht aus zwei miteinander fluchtenden Endbereichen TE1 und TE2, die die Schwenkachse H bilden und einem außerhalb der Schwenkachse H verlaufenden Mittelabschnitt TM. Endbereiche TE1 und TE2 sind mit dem Mittelabschnitt TM über etwa im Winkel von 45° verlaufende Übergangsabschnitte TZ1 und TZ2 verbunden, so daß die in Figur 4 sichtbare Struktur des Tragbügels T gebildet ist.

Gemäß einer besonders bevorzugten Ausgestaltung ist die Formgebung von Tragbügel T und Stützbügel S im wesentlichen gleich, d.h. ihr mittlerer, sich über die größte Länge des jeweiligen Bügels erstreckender Bereich liegt außerhalb der jeweiligen Befestigungspunkte der Bügel im Rahmen:

Die Tragbügel T sind hierbei um die Schwenkachse H im Rahmen R um etwa 90° verschwenkbar gehalten; bei dem in den Figuren 4 bis 6 dargestellten Ausführungsbeispiel mit dem rechteckigen Rahmenprofil kann dies durch eine Bohrung erreicht werden, bei der Runddrahtlösung des Rahmens gemäß Figuren 2 und 3 durch besagte Lochscheiben LS.

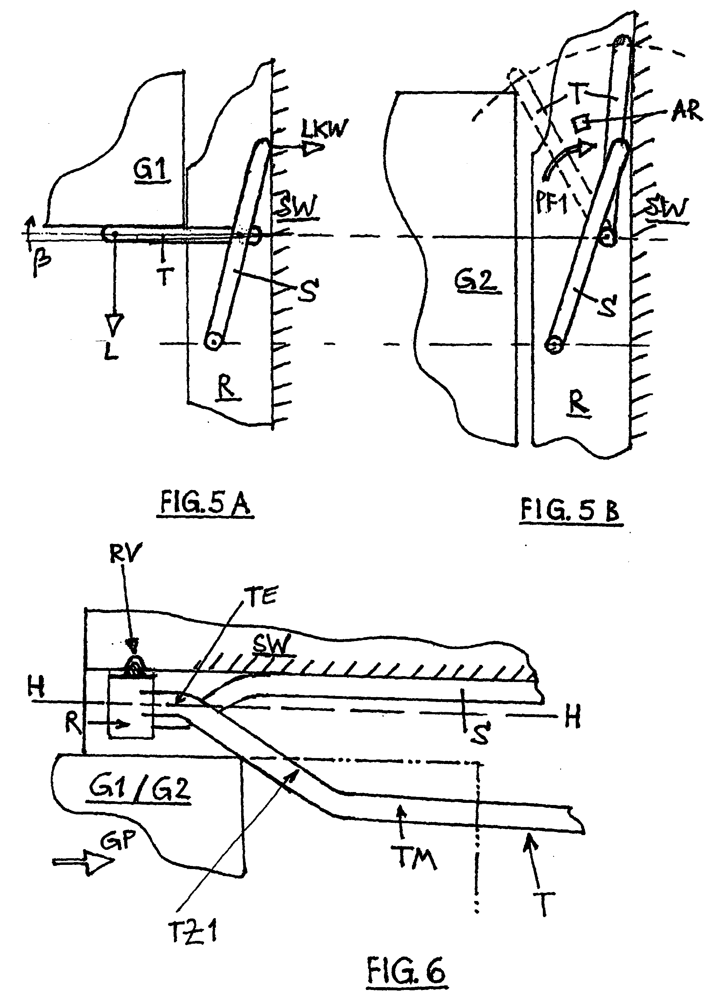

Die Haltepunkte P des Stützbügels S sind zweckmäßigerweise so ausgestaltet, daß auch eine gewisse Beweglichkeit des Stützbügels bzw. Verdrehbarkeit um diese Haltepunkte P gegeben ist, dies ist jedoch nicht notwendigerweise so, sofern gewährleistet ist, daß sich der Stützbügel S mit seinem mittleren außerhalb der Verbindungsachse der beiden gegenüberliegenden Haltepunkte P liegenden Abschnitt abstützen kann, wie dies insbesondere in den Figuren 5 und 6 dargestellt ist; hierbei dient zur Abstützung die Seitenwandung SW des in Figur 1 dargestellten Gehäuses Z.

Der Tragbügel T ist so um die Schwenkachse H verschwenkbar, daß sein Mittelabschnitt TM eine im wesentlichen horizontale Auflageebene für einen Gegenstand G1 oder G2 bildet, dessen anteilige Last L er trägt. Diese Aufnahmeposition A des Tragbügels T ist in Figur 4A und Figur 5A dargestellt.

Durch die seitlich versetzte Anordnung der Schwenkachse H einerseits und der Haltepunkte P andererseits und durch die im wesentlichen korrespondierende Formgebung von Stützbügel S und Tragbügel T im Übergangsbereich zwischen Halterung und mittlerem zentralen Abschnitt, stützt sich in dieser Aufnahmeposition A der Tragbügel T mit seinen schräg verlaufenden Übergangsabschnitten TZ1 und TZ2 auf den darunter liegenden, entsprechenden Randabschnitten des Stützbügels S ab, so daß die anteilige Last L im wesentlichen in die Lagerachse der Drehachse H und den Haltepunkten P und damit in den Boden des Gehäuses eingeleitet wird, wobei eine Wandungskomponente LKW von dem längeren, mittleren Abschnitt des Stützbügels S in die Seitenwandung SW eingeleitet wird.

Von Bedeutung hierbei ist, daß die Reaktionskräfte in den Achsen der Bügel zumindest im wesentlichen in der Längsachse des Rahmens verlaufen, so daß auch bei leichteren Konstruktionen, wie der in Figur 2 und 3 dargestellten Voll-Runddrahtbügelkonzeption, keine wesentlichen Biegemomente auftreten.

In dieser Position kann also ein erster Gegenstand G1 auf den aus der Rahmenebene hervorspringenden Mittelabschnitt TM des Tragbügels schlittenartig aufgeschoben werden, wie dies in Figur 6 mit der doppelt strichpunktierten Linie angedeutet sein soll.

Ein wesentliches Merkmal der Erfindung besteht nun aber auch darin, daß der Tragbügel T aus seiner Aufnahmeposition in eine Freigabeposition F im wesentlichen in die Ebene des Rahmens R weg schwenkbar ist, wie dies in Figuren 4B und 5B dargestellt ist:

Dies wird insbesondere der Fall sein, wenn ein zweiter Gegenstand G2 (Figur 5B und Figur 6), der auf einer weiter unten liegenden Etage eingeschoben wird, den in seiner Aufnahmeposition A (Figur 6) abgeklappten Tragbügel T mit einer seiner vorderen Vertikalkanten kontaktiert: Beim Einschieben des Gegenstandes G2 wird diese vordere Vertikalkante infolge des schrägen Verlaufs des Übergangsabschnitts TZ1 des Tragbügels T zwischen seiner Achsenlagerung und seinem Aufnahmeabschnitt diesen nach oben wegschwenken, wie dies durch den Pfeil PF1 in Figur 5B angedeutet ist, da der Tragbügel T um einen minimalen Winkel β nach oben von der Horizontalen abweicht.

Wie weit die Verschwenkung des Tragbügels T hierbei durchgeführt wird, ob in die in Figur 5B gestrichelt dargestellte Position, bei der er auf der Oberkante des Gegenstandes G2 aufliegt, oder in eine Rastposition, wo er sich ebenfalls wie der Stützbügel an der Seitenwandung SW abstützt, ist hierbei zunächst nicht von Bedeutung. Wenn die einzuschiebenden Gegenstände beispielsweise beidseitig in gleicher Höhe einen geeigneten Anschlag für die anliegenden Tragbügel aufweisen, kann hierdurch auch eine Zentrierung des Gegenstandes G im Gehäuse Z erreicht werden.

Es ist jedoch zweckmäßig, wenn im Rahmen R oder in der Formgebung des Tragbügels T Vorkehrungen getroffen sind, daß der Schwerpunkt des Tragbügels T vor der Schwenkachse H zu liegen kommt (beispielsweise durch eine Anschlagrippe AR im Rahmen R), wodurch gewährleistet ist, daß der Tragbügel T sofort wieder in seine Aufnahmeposition A zurückfallen kann, sobald der betreffende Gegenstand G2 aus der Etage entnommen wird.

Bei dieser Konstellation ergibt sich demnach also ein Bild dahingehend, daß grundsätzlich sämtliche Tragbügel T eines Rahmens (also beispielsweise die zehn Tragbügel T1...T10 des Rahmens gemäß Figur 2) sich in ihrer Aufnahmeposition A befinden, so daß jede der Etagen zur Einführung eines Gegenstandes G1 oder G2 genutzt werden kann; sollte die Höhe eines Gegenstandes G größer sein als der Abstand zwischen den Etagen, würde dann der oder die darüber liegende(n) Tragbügel(n) in der beschriebenen Weise "automatisch" beim Einschieben des Gegenstandes G2 nach oben geklappt werden und somit den Weg zur Einführung eines solchen Gegenstandes freigeben.

Durch diese Geometrie gegeben, kann der Tragbügel T von der in den Figuren durchgezeichnet gezeigten Aufnahmeposition A in Richtung des Pfeiles PF1 nach oben in seine Freigabeposition B verschwenkt werden, wenn ein Gegenstand G1,G2 gegen den Übergangsabschnitt TZ 1 des Tragbügels T geschoben wird. Der Winkel β und die Dimensionierung des abgewinkelt verlaufenden Übergangsabschnitts TZ1 des Tragbügels T bewirken, daß die räumliche Anordnung dieses Übergangsabschnitts TZ1 gesehen aus Einschubrichtung GP eines Gegenstandes G1,G2 nach oben und nach innen geneigt ist. Die beim Einschieben eines Gegenstandes G1 auf einer der unteren Ebenen E1...E3 ausgeübte Kraft im Bereich des Übergangsabschnitts TZ1 führt folglich zu einer Kraftkomponente, die das automatische Hochklappen des Tragbügels T aus seiner Aufnahmeposition A (Figur 5A) in die Freigabeposition B (Figur 5B) bewirkt. Dadurch wird der Weg zum weiteren Durchschieben des Gegenstandes G1,G2 freigegeben, wobei dann beispielsweise der Mittelabschnitt TM des Tragbügels T an einer Seitenfläche des Gegenstandes G anliegt, wie dies in Figur 5B dargestellt ist. Auf diese Weise kann der Gegenstand G1,G2 dann in eine Endposition innerhalb des Gehäuses eingeschoben werden, wie dies gestrichelt in Figur 2 unten dargestellt ist.

Das dynamische Zusammenspiel von Winkel β einerseits und abgewinkeltem Übergangsabschnitt TZ1 andererseits ermöglicht dabei zuverlässig diesen Hochklappvorgang.

Die erfindungsgemäße Vorrichtung mit den beiden gegenüberliegenden Rahmen eignet sich daher insbesondere für die Stapelung solcher Gegenstände, die in ihrer Breite, insbesondere aber auch in ihrer Höhe einen beträchtlichen Toleranzspielraum aufweisen, da diese sicher untergebracht werden können.

Der Rahmen R ist mittels einer Rastverbindung in der Seitenwandung SW festgesetzt, dies ist insbesondere sinnvoll und erforderlich, um beim Einschieben oder Herausziehen von Gegenständen G auftretende Horizontalkräfte in das Gehäuse Z einzuleiten, ohne daß der Rahmen mit aus dem Gehäuse herausgezogen wird.

## Patentansprüche

1. Vorrichtung zur Aufnahme mehrerer Gegenstände in übereinanderliegenden Etagen mit einer Vielzahl von in vorgegebenen Abständen (x) in zwei Seitenflächen übereinander angeordneten, in einer Aufnahmeposition (A) und einer Freigabeposition (F) festlegbaren Tragbügeln (T) zur Aufnahme der Gegenstände, sowie mit einer mindestens gleichen Anzahl von jedem Tragbügel zugeordneten Stützbügeln (S), wobei der um eine horizontale Schwenkachse (H) verschwenkbare Tragbügel (T) und sein zugehöriger Stützbügel (S) derart übereinander angeordnet und geformt sind, daß der Tragbügel (T) in seiner Aufnahmeposition (A) sich über seinen zugeordneten, gegen eine Gegenfläche verschwenkbaren Stützbügel (S) abstützt und die Last (L) eines Gegenstandes (G) aufnimmt, und in seiner Freigabeposition (F) nach oben verschwenkt ist, **dadurch gekennzeichnet, dass** jede Seitenfläche durch jeweils einen Rahmen (R), an dessen vertikalen Abschnitten die Stützbügel (S) gehalten sind, gebildet sind, dass die beiden Rahmen (R) derart in einem Gehäuse (Z) positioniert sind, dass dessen Seitenwandung (SW) die Gegenfläche für die Stützbügel (S) bildet, und dass zumindest der Tragbügel (T) aus Draht gefertigt ist.

2. Vorrichtung nach Anspruch 1, **dadurch gekennzeichnet, daß** auch der Rahmen (R) aus Draht gefertigt ist.

3. Vorrichtung nach Anspruch 1, **dadurch gekennzeichnet, daß** auch die Stützbügel (S) aus Draht gefertigt sind.

4. Vorrichtung nach Anspruch 1, **dadurch gekennzeichnet, daß** die Rahmen (R) über eine Rastverbindung (RV) im Gehäuse (Z) ortsfest fixierbar sind.

5. Vorrichtung nach Anspruch 1, **dadurch gekennzeichnet, daß** das Gehäuse (Z) ein Isolierbehälter zur Aufnahme von Lebensmitteln, Speisen und Getränken ist.

6. Vorrichtung nach Anspruch 1, **dadurch gekennzeichnet, daß** der Tragbügel (T) zumindest über Teilabschnitte seiner Gesamtlänge außerhalb seiner Schwenkachse (H) verläuft.

7. Vorrichtung nach Anspruch 1 und 6, **dadurch gekennzeichnet, daß** zumindest der Übergangsbereich des Tragbügels (T) zwischen seinen Haltepunkten in der Schwenkachse (H) und seinem Mittelabschnitt (TM) in der Aufnahmeposition (A) einen räumlichen Verlauf aufweist, durch den bei Einschub eines Gegenstands(G) ein Drehmoment auf den Tragbügel (T) erzeugt wird, das diesen nach oben in seine Freigabeposition (F) schwenkt.

8. Vorrichtung nach Anspruch 7, **dadurch gekennzeichnet, daß** der Übergangsbereich des Tragbügels (T) um einen spitzen Winkel (β) aus der Horizontalen nach oben geneigte Übergangsabschnitte (TZ1, TZ2) sind.

9. Vorrichtung nach Anspruch 1 und 6, **dadurch gekennzeichnet , daß** der Schwerpunkt des Tragbügels (T) in seiner Freigabeposition (F) etwa in der Ebene des Rahmens (R) derart außerhalb seiner Schwenkachse (H) liegt , daß der Tragbügel (T) ohne Last (L) aufgrund seines Gewicht-Drehmoments in seine Aufnahmeposition (A) schwenkt.

10. Vorrichtung nach Anspruch 1, **dadurch gekennzeichnet, daß** jedem Tragbügel (T1...T7) ein Stützbügel (S1...S7) zugeordnet ist.

11. Vorrichtung nach Anspruch 6, **dadurch gekennzeichnet, daß** die Haltepunkte (P) des Stützbügels (S) im Rahmen (R) unterhalb der Schwenkachse (H) des zugeordneten Tragbügels (T) liegen.

12. Vorrichtung nach Anspruch 1 und 11, **dadurch gekennzeichnet, daß** der Stützbügel (S) derart aus seinem Haltepunkt (P) herausgeführt ist , daß er den außerhalb der Schwenkachse (H) liegenden Abschnitt des zugeordneten Tragbügels (T) kontaktiert und sperrt, wenn der Tragbügel (T) sich in seiner Aufnahmeposition (A) befindet.

## Claims

1. Apparatus for accommodating a plurality of articles in superposed levels including a multitude of carrying brackets (T) for accommodating the articles, which carrying brackets (T) are disposed above each other at predetermined spacings (x) in two lateral faces and are securable in a receiving position (A) and a release position (F), said apparatus also including at least same number of support brackets (S), associated with each carrying bracket, the carrying bracket (T), which is pivotable about a horizontal pivotal axis (H), and its associated support bracket (S) being disposed above each other and shaped in such a manner that the carrying bracket (T), in its receiving position (A), is supported above its associated support bracket (S), which is pivotable relative to a counter face, and accepts the load (L) of an article (G), and, in its release position (F), is pivoted upwards, **characterised in that** each lateral face is formed by a respective frame (R), on the vertical sections of which the support brackets (S) are retained, **in that** the two frames (R) are positioned in such a manner in a housing (Z) that the lateral wall (SW) of the housing (Z) forms the counter face for the support brackets (S), and **in that** at least the carrying bracket (T) is produced from wire.

2. Apparatus according to claim 1, **characterised in that** the frame (R) is also produced from wire.

3. Apparatus according to claim 1, **characterised in that** the support brackets (S) are also produced from wire.

4. Apparatus according to claim 1, **characterised in that** the frames (R) are fixable so as to be non-displaceable via a locking connection (RV) in the housing (Z).

5. Apparatus according to claim 1, **characterised in that** the housing (Z) is a vacuum container for accommodating foodstuffs, meals and drinks.

6. Apparatus according to claim 1, **characterised in that** the carrying bracket (T) extends externally of its pivotal axis (H) at least over part sections of its overall length.

7. Apparatus according to claim 1 and 6, **characterised in that** at least the transition region of the carrying bracket (T) between its retaining points in the pivotal axis (H) and its central section (TM) in the receiving position (A) includes a spatial development, by means of which, when an article (G) is inserted, a torque is created on the carrying bracket (T), which pivots the carrying bracket (T) upwards into its release position (F).

8. Apparatus according to claim 7, **characterised in that** transition sections (TZ1, TZ2), which are inclined upwardly from the horizontal about an acute angle (β), are the transition region of the carrying bracket (T).

9. Apparatus according to claim 1 and 6, **characterised in that** the centre of gravity of the carrying bracket (T) in its release position (F) lies roughly in the plane of the frame (R) in such a manner externally of its pivotal axis (H) that the carrying bracket (T) pivots into its receiving position (A) with no load (L) on account of its weight-torque.

10. Apparatus according to claim 1, **characterised in that** a supporting bracket (S1...S7) is associated with each carrying bracket (T1...T7).

11. Apparatus according to claim 6, **characterised in that** the retaining points (P) of the supporting bracket (S) in the frame (R) lie beneath the pivotal axis (H) of the associated carrying bracket (T).

12. Apparatus according to claim 1 and 11, **characterised in that** the supporting bracket (S) is removed in such a manner from its retaining point (P) that it contacts and locks the section of the associated carrying bracket (T), which lies externally of the pivotal axis (H), when the carrying bracket (T) is situated in its receiving position (A).

## Revendications

1. Dispositif pour recevoir plusieurs articles dans des étages superposés, comprenant d'une part des étriers porteurs (T) pour recevoir les articles, ces étriers étant disposés les uns au-dessus des autres à distances prédéterminées (x) sur deux surfaces latérales et pouvant être immobilisés dans une position de réception (A) et une position de dégagement (F), ainsi que d'autre part un nombre au moins égal d'étriers de soutien (S) associés à chaque étrier porteur, l'étrier porteur (T) pouvant pivoter autour d'un axe de pivotement horizontal (H) et son étrier de soutien associé (S) étant agencés l'un au-dessus de l'autre et formés de manière que dans sa position de réception (A) l'étrier porteur (T) s'appuie sur son étrier de soutien (S) associé pouvant pivoter contre une contre-face et reprend la charge (L) d'un article (G), et que dans sa position de dégagement (F) l'étrier porteur (T) est pivoté vers le haut, **caractérisé en ce que** chaque surface latérale est constituée par un cadre (R) aux parties verticales duquel sont retenus les étriers de soutien (S), **en ce que** les deux cadres (R) sont positionnés dans un boîtier (Z) de telle manière que la paroi latérale de ce dernier (SW) constitue les contre-faces pour les étriers de soutien (S), et **en ce qu'**au moins les étriers porteurs (T) sont faits en fil.

2. Dispositif selon la revendication 1, **caractérisé en ce que** le cadre (R) est également réalisé en fil.

3. Dispositif selon la revendication 1, **caractérisé en ce que** les étriers de soutien (S) sont également réalisés en fil.

4. Dispositif selon la revendication 1, **caractérisé en ce que** les cadres (R) sont fixables de façon immobile dans le boîtier (Z) par l'intermédiaire d'une fixation à enclenchement (RV).

5. Dispositif selon la revendication 1, **caractérisé en ce que** le boîtier (Z) est un contenant isolant pour recevoir des vivres, des mets et des boissons.

6. Dispositif selon la revendication 1, **caractérisé en ce que** l'étrier porteur (T) s'étend au moins sur des parties de sa longueur totale en-dehors de son axe de pivotement (H).

7. Dispositif selon revendication 1 et 6, **caractérisé en ce qu'**au moins la zone de transition de l'étrier porteur (T) entre ses points de retenue dans l'axe de pivotement (H) et sa partie centrale (TM) présente dans la position de réception (A) une allure spatiale par laquelle il s'exerce sur l'étrier porteur (T) lors de l'introduction d'un article (G) un moment qui fait pivoter l'étrier porteur vers le haut dans sa position de dégagement (F).

8. Dispositif selon la revendication 7, **caractérisé en ce que** la zone de transition de l'étrier porteur (T) est constituée par des parties de transition (TZ1, TZ2) inclinées vers le haut d'un angle aigu (β) par rapport à l'horizontale.

9. Dispositif selon revendication 1 et 6, **caractérisé en ce que** le centre de gravité de l'étrier porteur (T) dans sa position de dégagement (F) est sensiblement situé dans le plan du cadre (R) et en-dehors de son axe de pivotement (H) de telle manière que l'étrier porteur (T) hors charge (L) pivote dans sa position de réception (A) en raison du moment de rotation de son poids.

10. Dispositif selon la revendication 1, **caractérisé en ce qu'**un étrier de soutien (S1... S7) est associé à chaque étrier porteur (T1... T7).

11. Dispositif selon la revendication 6, **caractérisé en ce que** les points de retenue (P) de l'étrier de soutien (S) dans le cadre (R) sont situés en-dessous de l'axe de pivotement (H) de l'étrier porteur associé (T).

12. Dispositif selon revendication 1 et 11, **caractérisé en ce que** l'étrier de soutien (S) s'étend à partir de son point de retenue (P) de telle manière qu'il vient en contact et arrête la partie de l'étrier porteur (T) associé située en-dehors de l'axe de pivotement (H) lorsque l'étrier porteur (T) se trouve dans sa position de réception (A).
